Europäisches Patentamt

**European Patent Office**

Office européen des brevets

(11) Numéro de publication: **0 225 256 B1**

(12) **FASCICULE DE BREVET EUROPEEN**

(45) Date de publication de fascicule du brevet: **15.07.92**  (51) Int. Cl.5: **G01N 21/43**, G02B 6/36

(21) Numéro de dépôt: **86402602.6**

(22) Date de dépôt: **21.11.86**

(54) **Dispositif de discrimination de fluides d'indices différents et dispositif de mesure de la fraction volumique d'au moins un fluide d'un courant de fluides non miscibles en comportant application.**

(30) Priorité: **27.11.85 FR 8517527**

(43) Date de publication de la demande:
**10.06.87 Bulletin 87/24**

(45) Mention de la délivrance du brevet:
**15.07.92 Bulletin 92/29**

(84) Etats contractants désignés:
**AT BE CH DE ES FR GB IT LI LU NL SE**

(56) Documents cités:
**DE-A- 1 927 330
DE-A- 3 302 089
FR-A- 2 130 037
US-A- 3 867 033**

**PATENT ABSTRACTS OF JAPAN, vol. 3, no. 113 (E-139), 19 septembre 1979, page 3 E 139; & JP-A-54 89 680**

**RESEARCH DISCLOSURE, no. 242, juin 1984, page 266, résumé no. 24229, Havant, Hampshire, GB: "Fiber optic connector"**

(73) Titulaire: **ELECTRICITE DE FRANCE Service National
2, rue Louis Murat
F-75008 Paris(FR)**

(72) Inventeur: **Ardity, Hervé**
**27 Avenue de l'Abreuvoir**
**F-78160 Marly Le Roi(FR)**
Inventeur: **Leboudec, Gilles**
**14 Rue du Vieil Abreuvoir**
**F-78100 Saint Germain en Laye(FR)**
Inventeur: **Graindhorge, Philippe**
**2 Square des Genêts**
**F-78470 Magny Les Hameaux(FR)**
Inventeur: **Gerardin, Jean-Pierre**
**122 Rue Sartrouville**
**F-92000 Nanterre(FR)**
Inventeur: **Lesne, Jean-Loup**
**63 Rue de la République**
**F-92190 Meudon(FR)**
Inventeur: **Meyet, Dominique**
**71 Rue Rambuteau**
**F-75004 Paris(FR)**

Rank Xerox (UK) Business Services

APPLIED OPTICS, vol. 21, no. 5, 1 mars 1982, pages 886-892, New York, US; M.A. VINCE et al.: "Optical probe for high-temperature local void fraction determination"

(74) Mandataire: **Polus, Camille et al c/o Cabinet Lavoix 2, Place d'Estienne d'Orves F-75441 Paris Cedex 09(FR)**

## Description

La présente invention concerne un dispositif de discrimination de fluides d'indices différents et dispositif de mesure de la fraction volumique d'au moins un fluide d'un courant de fluides non miscibles en comportant application. Le terme "courant" utilisé dans cette description, signifie un mouvement relatif des fluides du courant par rapport au capteur d'un dispositif de discrimination ou de mesure.

Le principe de fonctionnement d'un tel dispositif de discrimination de fluides est basé sur la différence des indices de réfraction, par exemple entre un gaz ou du vide (indice égal à 1) et un liquide (pour l'eau 1,3). En effet, lorsqu'un faisceau lumineux se propageant dans une fibre optique multimode atteint son extrémité, le coefficient de réflexion que subit le faisceau dépend de la différence des indices de réfraction entre la fibre et le milieu extérieur en contact avec l'extrémité de la fibre. Ainsi en mesurant la lumière en retour, on peut en déduire à tout instant, l'indice de réfraction du fluide en contact avec l'extrémité de la fibre et donc la nature de ce fluide (gaz ou liquide). En effectuant une moyenne dans le temps, on obtient la fraction volumique locale de chaque fluide dans le courant au niveau de l'extrémité de la sonde et on pourra alors obtenir la fraction volumique, par extension à un certain volume autour de l'extrémité de la fibre en fonction du modèle hydraulique choisi.

Des dispositifs connus, remplissant une telle fonction, sont constitués par un laser à gaz par exemple du type hélium-néon, dont le faisceau est couplé dans une fibre optique multimode par l'intermédiaire de moyens de couplage optiques (lentille) après avoir traversé une lame séparatrice, cette fibre étant directement utilisée comme sonde de mesure. Le faisceau réfléchi est capté par un photomultiplicateur. L'utilisation d'un photomultiplicateur rendue nécessaire par les pertes optiques de la chaîne, et son association à un laser à gaz et à des éléments optiques de couplage, nécessitent des montages mécaniques et conduisent à un dispositif encombrant et relativement fragile. Par ailleurs, en raison de la conception utilisant une fibre unique, la sonde de mesure, soumise à des contraintes d'environnement sévères, ne peut être remplacée qu'en démontant totalement le dispositif. Enfin, le laser étant un laser continu, la lumière en retour ne peut être distinguée de la lumière ambiante sans dispositif supplémentaire coûteux, fragile, encombrant ou limitatif, et il est donc nécessaire que cette lumière ambiante soit maintenue à un niveau suffisamment faible.

Le document DE-A-3 302 089 décrit un dispositif de discrimination de fluides d'indices optiques différents. Ce dispositif connu comprend un coupleur à fibres optiques à trois extrémités auxquelles sont reliées respectivement une source lumineuse à semi-conducteur dont l'intensité est modulée, un photodétecteur à semi-conducteur et une sonde optique constituée par une fibre optique multimode de même profil d'indices que les fibres du coupleur.

D'après Patent Abstracts of Japan, volume 3, n° 113 (E-139), 19 septembre 1979, page 3, E 139, & JP-A-5 489 680 (Matsushita Denki Sangyo K.K) 16.07.79, on connaît également un procédé et un appareil de mesure optique comprenant un coupleur optique, une source lumineuse, un photodétecteur et une sonde optique.

Le but de l'invention est de fournir un dispositif de discrimination permettant de diminuer les pertes optiques, dont l'encombrement et la fragilité soient réduits, dont le rapport signal sur bruit soit élevé et dont le temps de montée soit faible.

Elle a pour objet un dispositif de discrimination de fluides d'indices différents, comprenant un coupleur à fibre optique à trois extrémités auxquelles sont reliées respectivement une source lumineuse à semi-conducteur dont l'intensité est modulée, un photodétecteur à semiconducteur et une sonde optique constituée par une fibre optique multimode de même profil d'indices que les fibres du coupleur, caractérisé en ce que l'extrémité de la fibre optique a une forme de pointe obtenue par étirage à chaud.

Conformément á une variante de réalisation, le circuit de modulation de la source lumineuse est relié à un amplificateur synchrone de démodulation et de filtrage du signal de sortie du photodétecteur et le dispositif de discrimination comprend en outre un circuit de discrimination de niveaux à un ou plusieurs seuils prédéterminés, recevant le signal de sortie de l'amplificateur synchrone.

Un tel dispositif de discrimination trouve avantageusement application dans un dispositif de mesure de la fraction volumique d'au moins un fluide d'un courant de fluides non miscibles, comportant un tel dispositif de discrimination et un circuit d'intégration du signal de sortie du circuit de discrimination de niveaux.

L'invention sera mieux comprise à la lumière de la description qui va suivre, donnée à titre d'exemple et faite en se référant aux dessins annexés, sur lesquels :

- la Fig.1 est un schéma synoptique d'un dispositif de mesure comportant un dispositif de discrimination selon l'invention ;
- la Fig.2 est un schéma d'un coupleur optique utilisé dans le dispositif de la Fig.1 ;
- la Fig.3 est un schéma de la fibre optique utilisée dans le dispositif de la Fig.1 ;
- les Fig.4A à 4C représentent des signaux pris en différents points du dispositif de la Fig.1.

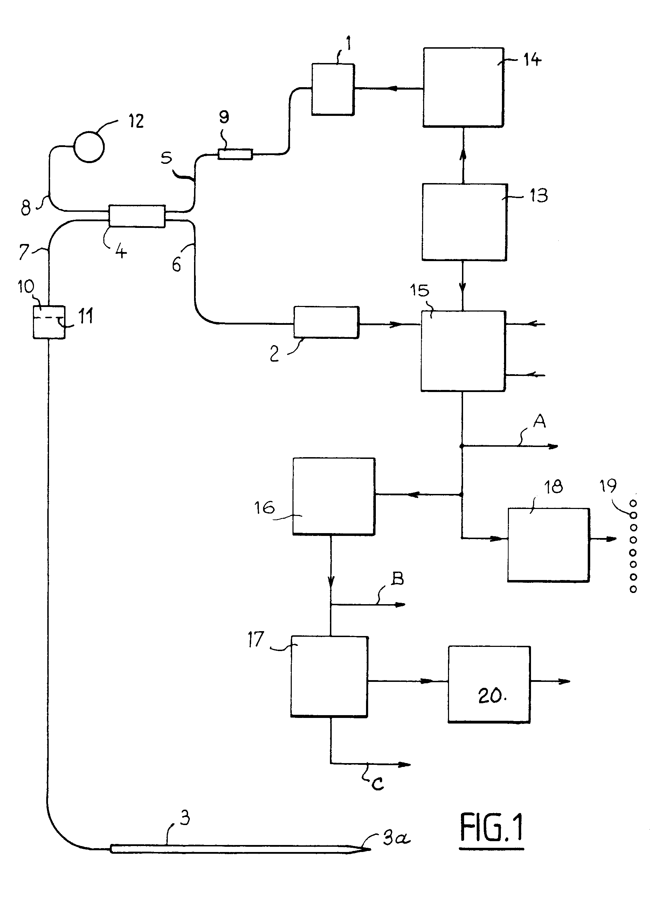

Le dispositif de mesure de la Fig.1 comporte une diode électroluminescente 1 munie d'une fibre amorce constituant la souce lumineuse (cette source lumineuse pouvant éventuellement être remplacée par un laser semi-conducteur), un photodétecteur 2 et une fibre optique 3 de détection ou sonde de mesure, ces éléments étant reliés entre eux par un coupleur à fibres optiques 4. Les caractéristiques de la fibre optique, de préférence une fibre à gradient d'indice, sont liées à celles de la diode 1. L'ensemble des fibres du dispositif présente un profil d'indices identique.

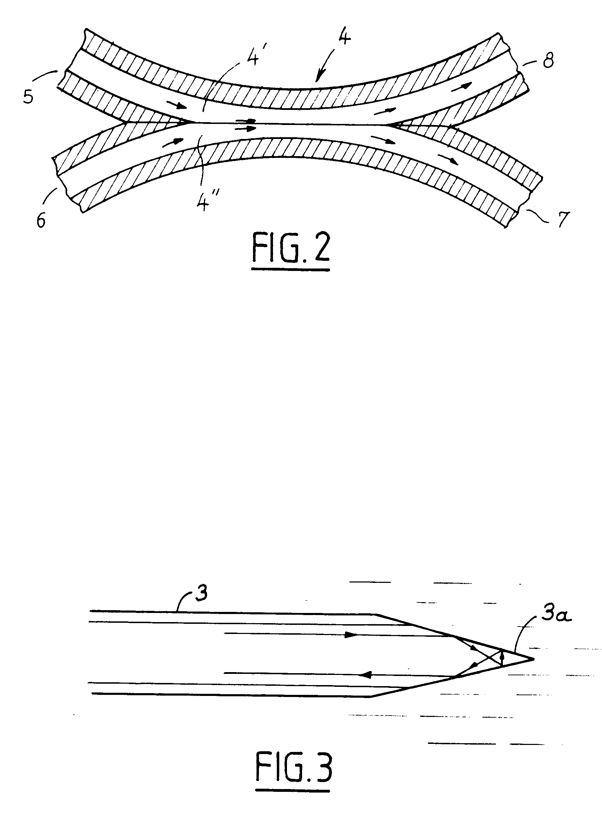

Ce coupleur comporte quatre extrémités de fibres 5 à 8 et sa structure est schématisée sur la Fig.2. Ce coupleur est constitué de deux fibres optiques dont les coeurs 4' et 4″ sont mis en intéraction optique soit par une fusion thermique, soit par polissage et mise en contact des parties des deux fibres qui doivent interagir. Les quatre extrémités de fibres jouent des rôles symétriques par paires: la lumière transmise à l'extrémité de fibre 5 se trouve ainsi également répartie entre les deux extrémités de fibres 7 et 8 par les portions de fibres qui interagissent. L'extrémité 6 joue le même rôle que l'extrémité 5, et de la même façon, le côté 7, 8 est symétrique du côté 5, 6 si l'on inverse le sens de propagation.

A titre d'exemple, toutes les fibres du dispositif peuvent être des fibres du type 100-140 à gradient d'indice et la diode électroluminescente peut être choisie avec une puissance 100 microwatt en bout de fibre amorce.

Comme on peut le voir sur la Fig.1 l'extrémité 5 du coupleur 4 est reliée à la diode 1 par l'intermédiaire d'une épissure 9, et l'extrémité 6 est reliée au photodétecteur 2. Le photodétecteur peut également être simplement positionné mécaniquement en face de l'extrémitré de fibre 6.

La fibre optique de détection 3 est reliée à l'extrémité 7 du coupleur par l'intermédiaire d'un connecteur optique 10, par exemple du type SMA 906 ou 905 commercialisé par la société Amphénol, ce qui permet le démontage simple et rapide de la sonde de mesure, un remplacement aisé de celle-ci et la mise en place éventuelle d'une rallonge. Cette connexion est adaptée en indice de réfraction, c'est-à-dire qu'entre les deux parties de connecteurs se trouve un film liquide 11 dont l'indice est égal à l'indice moyen du coeur des fibres. Il n'y a ainsi aucune réflexion parasite provoquée par le connecteur. De même, la dernière extrémité de fibre 8 du coupleur 4 est enrobée d'une colle 12 adaptatrice d'indice (c'est-à-dire dont l'indice de réfraction est égal à celui de la fibre). Ainsi, la lumière se propageant dans cette extrémité de fibre ne subit pas de réflexion à son extrémité, et ne crée donc pas de signal parasite. Il va de soi que cette extrémité de fibre peut être reliée à une autre sonde optique de détection en prévoyant un connecteur optique entre cette extrémité enduite de colle et le coupleur optique. On peut également concevoir un coupleur optique comportant plus de deux fibres dont les coeurs sont mis en intéraction optique.

La façon dont est traitée l'extrémité de la fibre de détection 3 joue un rôle très important dans le fonctionnement du dispositif. En effet, si la sonde est simplement l'extrémité clivée d'une fibre optique, des effets hydro-dynamiques viennent perturber le fonctionnement du dispositif. Lorsque la face plane de la fibre passe du milieu liquide au milieu gazeux, il se produit un effet de séchage progessif, qui fait que le signal de réflexion croit lentement, à la vitesse où le liquide sèche. Cet effet est lié à des phénomènes de capillarité à la surface de l'extrémité 3a de la fibre 3. Il est annulé si l'extrémité de la fibre 1 est rendue assez fine en étirant sur l'extrémité 3a en pointe ; cet étirage est réalisé en chauffant la fibre jusqu'à son point de ramollissement, et en effectuant une traction sur la fibre. Le résultat est une extrémité de forme cônique, dont l'angle au sommet est très faible (inférieur à 10 degrés). Cette méthode de fabrication permet de conserver la structure coeur-gaine de la fibre jusqu'à l'extrémité du cône. Cette extrémité présente par ailleurs un rayon de courbure extrêmement faible (inférieur à 20 micromètres). Les propriétés d'une extrémité de fibre réalisée par cette méthode sont les suivantes :

- une absence totale d'effet de séchage ;en effet, le rayon de courbure de l'extrémité est suffisamment faible pour que les forces de capillarité ne soient pas suffisantes pour maintenir une goutte de liquide sur la pointe de la fibre. L'allongement du temps de réponse du capteur lié aux effets de capillarité est ainsi totalement supprimé ;

- un coefficient de réflexion très proche de un lorsque l'extrémité se trouve dans un milieu gazeux, en effet la conservation de la structure de la fibre dans la région cônique, et le façonnage à chaud et contrôlé de l'extrémité permettent d'obtenir un effet de réflexion interne totale de la totalité du faisceau à l'extrémité de fibre lorsque celle-ci est située dans un milieu gazeux. Ceci améliore beaucoup la qualité du signal en retour et facilite le traitement ;

- un temps de transition liquide-gaz et gaz-liquide très faible, en raison de la faible dimension de la zone d'interaction.

Par ailleurs, cette méthode de réalisation est relativement simple à mettre en oeuvre, et permet d'obtenir de très bons rendements de fabrication, ainsi qu'une bonne reproductibilité des performances.

La diode électroluminescente 1 est compatible avec une technologie électronique basse tension pour son alimentation et sa modulation dont les avantages seront énoncés par la suite. Ainsi, le dispositif de mesure selon l'invention comporte un générateur de signal d'horloge 13 dont une première sortie est reliée à un circuit modulateur 14. La soritie du circuit 14 est reliée à l'entrée de la diode électroluminescente et permet donc la modulation de la lumière émise. La fréquence de modulation est choisie pour être environ dix fois supérieure à l'inverse du temps de montée désiré du signal de sortie du photodétecteur, par exemple de un MHz pour un temps de montée de dix microsecondes. La diode 1 transmet de la lumière modulée par l'intermédiaire du coupleur 4 à la fibre optique 3 et la lumière réfléchie à l'extrémité de la fibre, en relation avec l'indice de réfraction du milieu en contact avec la pointe de la fibre 3, est détectée par le photodétecteur 2 après avoir retraversé le coupleur 4. La sortie du photodétecteur 2 est reliée à un amplificateur synchrone 15 permettant la démodulation de la lumière détectée en retour ou signal utile. Cette modulation est effectuée par multiplication du signal en retour par le signal de sortie du circuit d'horloge 13 et par filtrage du signal résultant par l'intermédiaire d'un filtre passe-bas inclus dans l'amplificateur 15. On obtient ainsi une insensibilité totale à la lumière ambiante, et un rapport signal sur bruit élevé.

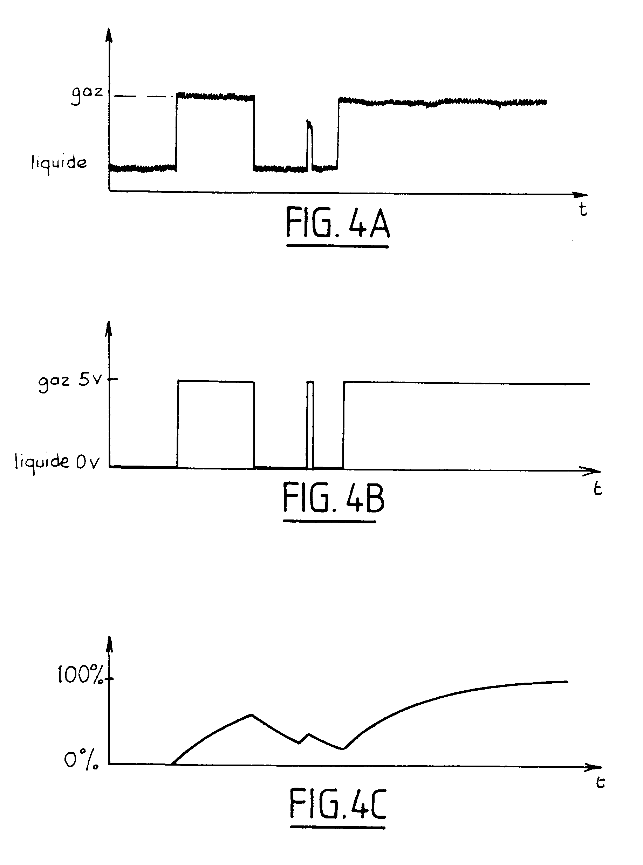

Le signal analogique fourni par le photodétecteur contient donc essentiellement deux niveaux électriques : le niveau correspondant à la phase liquide, et celui de la phase gazeuse. Ce signal analogique à la sortie A de l'amplificateur 15 est représenté sur la Fig.4A. Un circuit 16 de discrimination de niveaux à un seuil permet d'obtenir à sa sortie B un signal logique à deux états représenté sur la Fig.4B. Les tensions électriques de ces deux états sont alors parfaitement connues. Il est bien entendu possible, à l'aide d'un circuit de discrimination à plusieurs seuils, de discriminer plus de deux fluides d'indices différents. Le signal au point B peut être avantageusement utilisé pour une granulométrie du courant. En effet, en mesurant les durées pendant lesquelles le signal est à l'état haut (ou à l'état bas ou à un niveau donné), on peut déduire le diamètre des bulles de gaz ou de vide du courant en divisant ces mesures par la vitesse d'écoulement du courant. En réalisant ensuite un graphique de distribution en fonction du nombre de bulles de chaque diamètre pour une série de diamètres prédéterminés, on obtient une granulométrie du courant.

Une application avantageuse d'un tel dispositif de discrimination réside dans la mesure de la fraction volumique d'au moins un fluide d'un courant de fluides non miscibles, c'est-à-dire qu'il existe un mouvement relatif du courant par rapport à la fibre optique de détection. Pour cela on effectue une intégration du signal à deux états de sortie du circuit 16 par l'intermédiaire d'un circuit intégrateur 17 pour obtenir à sa sortie C, une valeur de la fraction volumique locale de gaz dans le courant (Fig.4C) qui est extrêmement précise, en raison de l'absence de bruit sur le signal logique, et de la précision avec laquelle on peut contrôler les tensions des deux états logiques. On peut également utiliser ce signal logique pour des opérations de comptage, ou de mesure de durées de deux phases.

Un certain nombre de fonctions secondaires peuvent être ajoutées au dispositif de mesure de base, pour en rendre son utilisation plus aisée :

- la visualisation du niveau de signal analogique par échelle lumineuse par l'intermédiaire d'un circuit d'affichage 18 et d'une série de diodes électroluminescentes 19. On voit ainsi d'un seul coup d'oeil les deux niveaux analogiques correspondant au liquide et au gaz,
- l'affichage numérique de la fraction volumique de gaz obtenue par filtrage du signal logique, par l'intermédiaire d'un circuit d'affichage 20 et d'un afficheur à trois digits par exemple,
- le réglage de l'offset et du gain de l'amplificateur, pour compenser respectivement une réflexion parasite due à un connecteur défaillant, et la perte optique sur un connecteur ou une fibre très longue. L'effet du réglage est visualisé par l'échelle lumineuse, rendant ainsi ce réglage rapide et simple à effecteur.

Le dispositif de discrimination de fluides d'indices différents tel que décrit précédemment présente de nombreux avantages en regard des dispositifs de mesure de l'art antérieur. Ces avantages sont entre autres une configuration mettant en jeu des composants peu coûteux, d'encombrements réduits, l'ensemble de la partie optique du dispositif pouvant occuper un volume compris entre 10 et 20 cm$^3$, un gain élevé de réflectivité de la sonde et un temps de montée optique très faible en raison de l'extrémité étirée de la fibre de détection, un démontage aisé de la fibre de détection, par exemple pour son remplacement, grâce au connecteur optique 10, un très bon rapport signal sur bruit grâce à la modulation-démodulation synchrone, et des possibilités d'établissement de nombreuses informations facilitant son utilisation dans un dispositif de mesure de la fraction volumique d'au moins un fluide d'un courant de fluides non miscibles.

Ces dispositifs de discrimination et de mesure trouvent de nombreuses applications dans les aérosols (granulométrie des goutellettes en suspension dans un gaz par exemple pour les nuages ou les mélanges pour les carburateurs pour moteurs à combustion in-terne), pour la mesure et le contrôle du rendement d'un cycle thermodynamique basse température mélange eau-vapeur), ou dans des mélanges de liquides non miscibles dans les industries chimique, agroalimentaire et pétrochimique (courant eau-pétrole).

**Revendications**

1. Dispositif de discrimination de fluides d'indices différents, comprenant un coupleur à fibre optique (4) à trois extrémités auxquelles sont reliées respectivement une source lumineuse (1) à semi-conducteur dont l'intensité est modulée, un photodétecteur (2) à semiconducteur et une sonde optique constituée par une fibre (3) optique multimode de même profil d'indices que les fibres du coupleur, caractérisé en ce que l'extrémité (3a) de la fibre optique a une forme de pointe obtenue par étirage à chaud.

2. Dispositif selon la revendication 1, caractérisé en ce qu'une fois étirée, la pointe (3a) est constituée par un cône d'angle au sommet inférieur à 10° et dont la structure coeur-gaîne est conservée jusqu'à l'extrémité de ladite point (3a).

3. Dispositif selon la revendication 2, caractérisé en ce que l'extrémité dudit cône a un rayon de courbure inférieur à 20 micrométres.

4. Dispositif selon l'une quelconque des revendications 1 à 3, caractérisé en ce que ladite fibre optique (3) de la sonde est une fibre à gradient d'indice.

5. Dispositif selon l'une quelconque des revendications 1 à 4, caractérisé en ce que la liaison de l'extrémité (7) du coupleur (4) à la fibre optique (3) comporte un connecteur optique (10).

6. Dispositif selon la revendication 5, caractérisé en ce qu'un film liquide (11) dont l'indice est égal à l'indice moyen du coeur des fibres optiques, est disposé entre les deux parties séparables du connecteur optique (10).

7. Dispositif selon l'une quelconque des revendications 1 à 6, caractérisé en ce que la fréquence de modulation de la source lumineuse (1) est supérieure à environ 500 KHz.

8. Dispositif selon l'une quelconque des revendications précédentes, caractérisé en ce que le circuit de modulation (13) de la source lumineuse (1) est relié à un amplificateur synchrone (15) de démodulation et de filtrage du signal de sortie du photodétecteur (2).

9. Dispositif selon la revendication 8, caractérisé en ce qu'il comprend un circuit de discrimination de niveaux (16) à un ou plusieurs seuils prédéterminés recevant le signal de sortie de l'amplificateur synchrone (15) ;

10. Dispositif de mesure de la fraction volumique d'au moins un fluide d'un courant de fluides non miscibles, comportant un circuit de discrimination de niveaux pour la discrimination de fluides, d'un circuit (17) d'intégration du signal de sortie du dispositif de discrimination, le circuit de discrimination étant tel que revendiqué dans la revendication 9.

**Claims**

1. A device for discriminating fluids having different indices, comprising a fibre optic coupler (4) with three ends to which are respectively connected a semiconductor source of light (1) whose intensity is modulated, a semiconductor photodetector (2) and an optical probe constituted by a multimode fibre optic (3) which has the same index profile as the fibres of the coupler, characterized in that the end (3a) of the fibre optic is in the shape of a point obtained by hot drawing out.

2. A device according to claim 1, characterized in that once it has been drawn out, the point (3a) is constituted by a cone which has an apex angle of less than 10° and a core-cladding structure which is retained right to the end of said point (3a).

3. A device according to claim 2, characterized in that the end of said cone has a radius of curvature of less than 20 micrometres.

4. A device according to any one of claims 1 to 3, characterized in that said fibre optic (3) of the probe is a fibre having an index gradient.

5. A device according to any one of claims 1 to 4, characterized in that the connection of the end (7) of the coupler (4) to the fibre optic (3) comprises an optical connector (10).

6. A device according to claim 5, characterized in that a liquid film (11) whose index is equal to the mean index of the core of fibre optics, is disposed between the two separable parts of the optical connector (10).

7. A device according to any one of claims 1 to 6, characterized in that the modulation frequency of the light source (1) is greater than about 500 kHz.

8. A device according to any one of the preceding claims, characterized in that the circuit (13) for modulating the light source (1) is connected to a synchronous amplifier (15) for demodulating and filtering the output signal of the photodetector (2).

9. A device according to claim 8, characterized in that it comprises a circuit for discriminating levels (16) at one or several predetermined thresholds receiving the output signal of the synchronous amplifier (15).

10. A device for measuring the voluminal fraction of at least one fluid of a current of non-miscible fluids, comprising a level discriminating circuit for discriminating fluids, a circuit (17) for integrating the output signal of the discriminating device, the discriminating circuit being as claimed in claim 9.

## Patentansprüche

1. Vorrichtung zur Unterscheidung von Fluiden unterschiedlicher Brechzahlen, bestehend aus einem Lichtleitfaser-Kuppler (4) mit drei Enden, mit denen eine Halbleiter-Lichtquelle (1), deren Helligkeit moduliert ist, ein Halbleiter-Photoempfänger (2) und eine optische Sonde verbunden sind, die aus einer Mehrmodenlichtleitfaser (3) mit demselben Brechzahlenprofil wie die Lichtleitfasern des Kupplers besteht, dadurch gekennzeichnet, daß das Ende (3a) der Lichtleitfaser eine durch Warmziehen erhaltene Spitzenform hat.

2. Vorrichtung nach Anspruch 1, dadurch gekennzeichnet, daß die Spitze (3a) nach dem Ziehen von einem Kegel mit einem Spitzenwinkel von weniger als 10° gebildet ist, dessen Kern-Mantel-Aufbau bis zum Ende der Spitze (3a) beibehalten ist.

3. Vorrichtung nach Anspruch 2, dadurch gekennzeichnet, daß das Ende des Kegels einen Krümmungsradius von weniger als 20 $\mu$ hat.

4. Vorrichtung nach einem der Ansprüche 1 bis 3, dadurch gekennzeichnet, daß die Lichtleitfaser (3) der Sonde eine Faser mit Brechzahlgradient ist.

5. Vorrichtung nach einem der Ansprüche 1 bis 4, dadurch gekennzeichnet, daß die Verbindung des Endes (7) des Kupplers (4) mit der Lichtleitfaser (3) einen optischen Verbinder (10) aufweist.

6. Vorrichtung nach Anspruch 5, dadurch gekennzeichnet, daß ein flüssiger Film (11), dessen Brechzahl gleich der mittleren Brechzahl des Kerns der Lichtleitfasern ist, zwischen den beiden trennbaren Teilen des optischen Verbinders (10) angeordnet ist.

7. Vorrichtung nach einem der Ansprüche 1 bis 6, dadurch gekennzeichnet, daß die Modulationsfrequenz der Lichtquelle (1) über etwa 500 kHz liegt.

8. Vorrichtung nach einem der vorhergehenden Ansprüche, dadurch gekennzeichnet, daß die Modulationsschaltung (13) der Lichtquelle (1) mit einem synchronen Verstärker (15) zum Demodulieren und Filtern des Ausgangssignals des Photoempfängers (2) verbunden ist.

9. Vorrichtung nach Anspruch 8, gekennzeichnet durch eine Stufenunterscheidungsschaltung (16) mit einer oder mehreren vorbestimmten Schwellen, die das Ausgangssignal des synchronen Verstärkers (15) aufnimmt.

10. Vorrichtung zur Messung des Volumenanteils wenigstens eines Fluids eines Stroms von nicht mischbaren Fluiden mit einer Stufenunterscheidungsschaltung für die Unterscheidung von Fluiden und einer Schaltung (17) zum Integrieren des Ausgangssignals der Unterscheidungseinrichtung, wobei die Unterscheidungsschaltung die in Anspruch 9 beanspruchte Schaltung ist.

FIG.1

FIG.2

FIG.3

FIG. 4A

FIG. 4B

FIG.4C